# EUROPÄISCHE PATENTSCHRIFT

(11) **EP 1 335 088 B1**
(45) Veröffentlichungstag und Bekanntmachung des Hinweises auf die Patenterteilung: **06.01.2010**
(21) Anmeldenummer: 03000386.7
(22) Anmeldetag: 10.01.2003
(51) Int. Cl.: E05C 3/02, B64D 29/06, E05C 3/34, E05C 3/06, B64C 1/14

(54) **Verriegelungs-Vorrichtung zur Verriegelung zweier Strukturteile**
Locking device for two structural elements
Dispositif de verrouillage pour deux éléments de structure

(30) Priorität: 14.01.2002 DE 10203523
(43) Veröffentlichungstag der Anmeldung: 13.08.2003
(73) Patentinhaber: EADS Deutschland GmbH, 85521 Ottobrunn (DE)
(72) Erfinder: Perez-Sanchez, Juan, 83620 Feldkirchen-Westerham (DE)

(56) Entgegenhaltungen:
- DE-C- 713 342
- US-A- 2 924 403
- US-A- 3 666 305
- US-A- 5 915 766

## Beschreibung

Die Erfindung betrifft eine Verriegelungs-Vorrichtung zur Verriegelung zweier Strukturteile und insbesondere zur Verriegelung einer Cockpit-Haube eines Fahrzeuges und z.B. eines Flugzeuges.

Aus dem Stand der Technik sind Verriegelungs-Vorrichtungen bekannt, die auf dem Shear-Pin-Prinzip beruhen. Dabei wird eine Augen-Gabel-Verbindung verwendet, bei der zur Verriegelung des Cockpits ein Verschluss-Bolzen durch ein Auge bewegt wird. Die Entriegelung erfolgt beim Herausziehen des Bolzens aus dieser verriegelten Position. Eine solche Anordnung ist z.B. aus US 2 924 403 A bekannt. Nachteilig ist, dass dabei Reibungskräfte überwunden werden müssen, die unter bestimmten Bedingungen wie bei großen thermischen Belastungen, sehr hoch sind. Dabei kann das Öffnen der Cockpit-Haube durch Verklemmen der Verriegelungs-Vorrichtung verhindert sein, was insbesondere für den Notfall ein schwerwiegender Fehler und unbedingt zu vermeiden ist.

Es ist daher die Aufgabe der Erfindung, eine Verriegelungs-Vorrichtung für Cockpit-Hauben bereitzustellen, mit der sich auch bei verhältnismäßig großen thermischen Belastungen ein Verklemmen mit Sicherheit vermeiden lässt.

Diese Aufgabe wird mit den Merkmalen des Patentanspruchs 1 gelöst. Weitere Ausführungsformen sind in den Unteransprüchen angegeben.

Erfindungsgemäß ist eine Verriegelungs-Vorrichtung zur Verriegelung zweier relativ zueinander beweglicher Struktur-Teile mittels eines zur Verriegelungs-Vorrichtung gehörenden Verriegelungs-Hakens vorgesehen, das in einem Gelenk mit einer Achse zur Verschwenkung des Verriegelungs-Hakens um eine Achse H mittels eines mit einem Betätigungselements in einer Bezugsebene gelagert ist, zumindest eine Verriegelungs-Mechanik mit jeweils einem mit dem Betätigungselement zur Drehung um eine Achse W zusammenwirkenden Wipphebel vorgesehen ist, der über ein erstes Drehgelenk mit dem ersten Ende eines Lenkhebels verbunden ist, dessen zweites Ende über ein zweites Drehgelenk mit dem Verriegelungs-Haken verbunden ist, wobei die Drehachse W des Wipphebels sowie die Drehachsen LW1, LW2; LH1, LH2 des ersten und des zweiten Drehgelenks sich in der Achse H des Verriegelungs-Hakens kreuzen.

Durch die erfindungsgemäße Verriegelungs-Vorrichtung ist ein verklemmungsfreies Verriegeln und Freigeben eines Bolzens sichergestellt.

Ein Vorteil der Erfindung ist, dass durch die Vielzahl der möglichen Ausführungsformen eine Vielzahl von Anwendungsmöglichkeiten gegeben ist.

Im folgenden wird die Erfindung anhand der beiliegenden Figuren beschrieben, die zeigen:
- Fig. 1a: eine perspektivische Darstellung einer Ausführungsform der erfindungsgemäßen Verriegelungs-Vorrichtung integriert in einem ausschnittsweise dargestellten Strukturteil in ihrer geschlossenen Stellung,
- Fig. 1b: die Verriegelungs-Vorrichtung nach der Figur 1a in ihrer offenen Stellung,
- Fig. 2: eine perspektivische Darstellung der Ausführungsform der erfindungsgemäßen Verriegelungs-Vorrichtung nach der Figur 1a oder 1b in seiner offenen Stellung, wobei das Strukturteil, in der die VerriegelungsVorrichtung integriert ist, teilweise aufgebrochen ist,
- Fig. 3: die Ausführungsform der Verriegelungs-Vorrichtung nach der Fig. 1a oder 1b in der Darstellung der Fig. 2 in ihrer geschlossenen Stellung,
- Fig. 4a: eine Frontansicht der Ausführungsform der Verriegelungs-Vorrichtung nach der Fig. 1a oder 1b in seiner geschlossenen Stellung,
- Fig. 4b: die Frontansicht der Ausführungsform der Verriegelungs-Vorrichtung nach der Fig. 4a in seiner offenen Stellung,
- Fig. 4c: die Verriegelungs-Vorrichtung nach der Fig. 4b von oben gesehen,

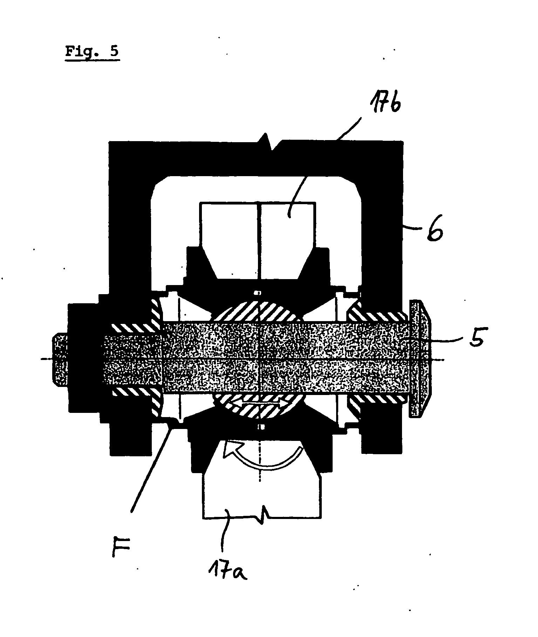

- Fig. 5: einen Schnitt durch die in den voranstehend bezeichneten Figuren dargestellte Ausführungsform der erfindungsgemäßen Verriegelungs-Vorrichtung, die in ihrer geschlossenen Stellung einen Verriegelungsbeschlag mit einem Bolzen im Eingriff hält.

Die erfindungsgemäße Verriegelungsvorrichtung 1 ist in einem ersten Strukturoder Bauteil 3 oder Gehäuse, das an diesem befestigt ist, integriert und aufgrund der Betätigung einer Steuerungs-Einheit (nicht dargestellt) zwischen einer geschlossenen und offenen Stellung beweglich. In ihrer geschlossenen Stellung hält die Verriegelungs-Vorrichtung 1 einen Verriegelungs-Bolzen 5 eines Bolzen-Beschlags 6 in Eingriff, der in der offenen Stellung der Verriegelungs-Vorrichtung 1 freigegeben wird. Der Bolzen-Beschlag 6 ist Teil eines zweiten Strukturteils (nicht dargestellt), das mit dem ersten Strukturteil 3 zusammenwirkt und mittels der Verriegelungs-Vorrichtung gegeneinander verriegelt und freigegeben werden kann. Das erste Strukturteil 3 kann insbesondere Teil eines Flugzeug-Rumpfes (nicht dargestellt) und das zweite Strukturteil kann Teil einer Cockpit-Haube sein. Es kann jedoch auch umgekehrt die Verriegelungs-Vorrichtung an der Cockpit-Haube angeordnet und der Bolzen-Beschlag 6 bzw. das zweite Strukturteil im FlugzeugRumpf integriert sein.

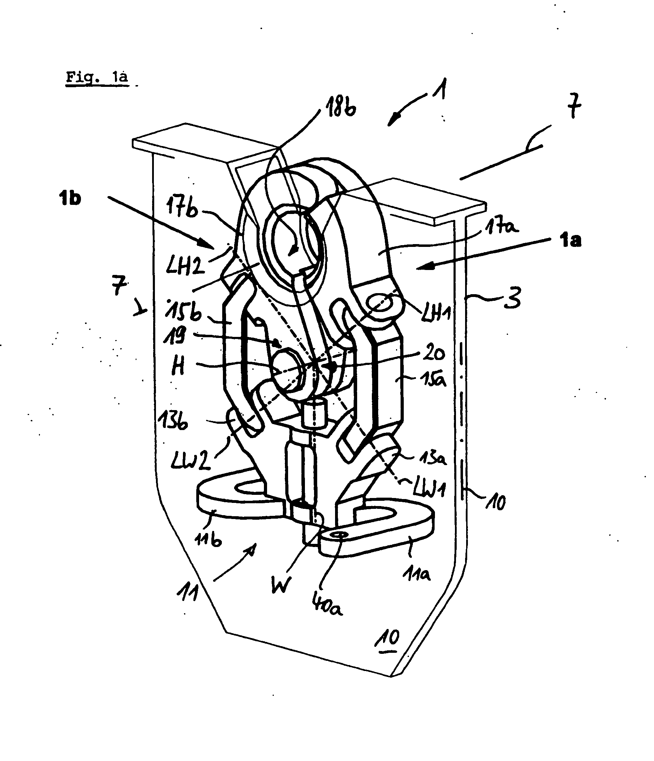

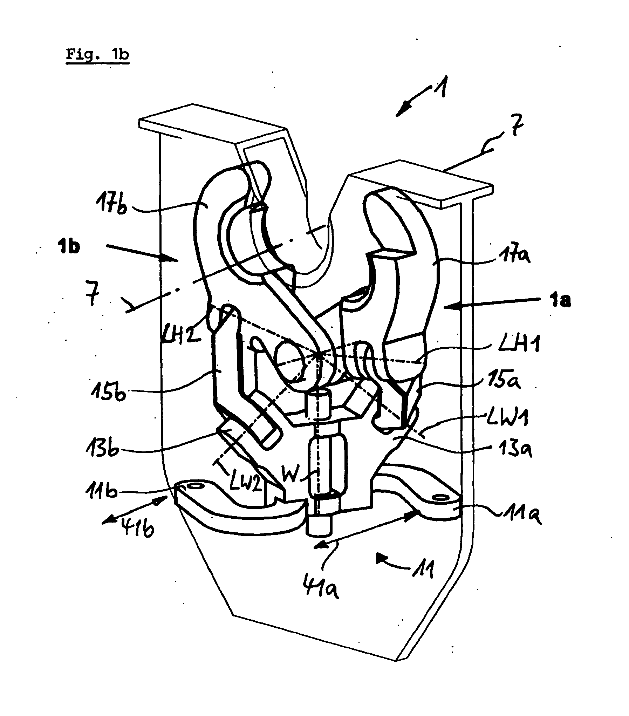

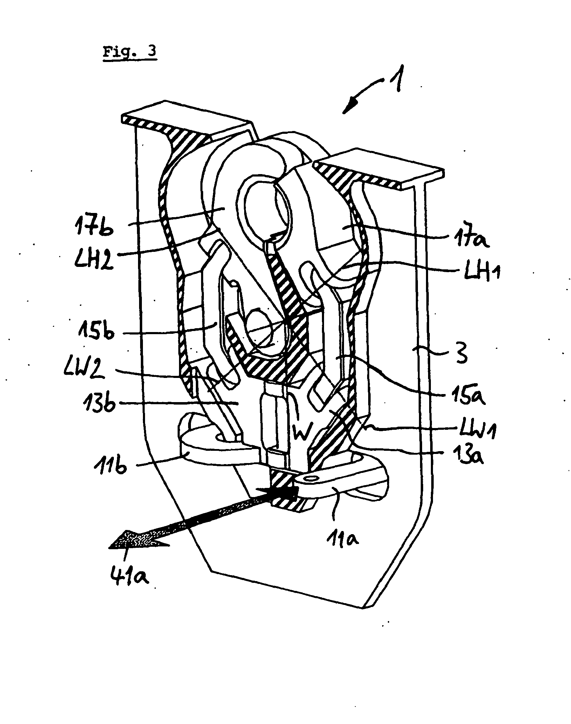

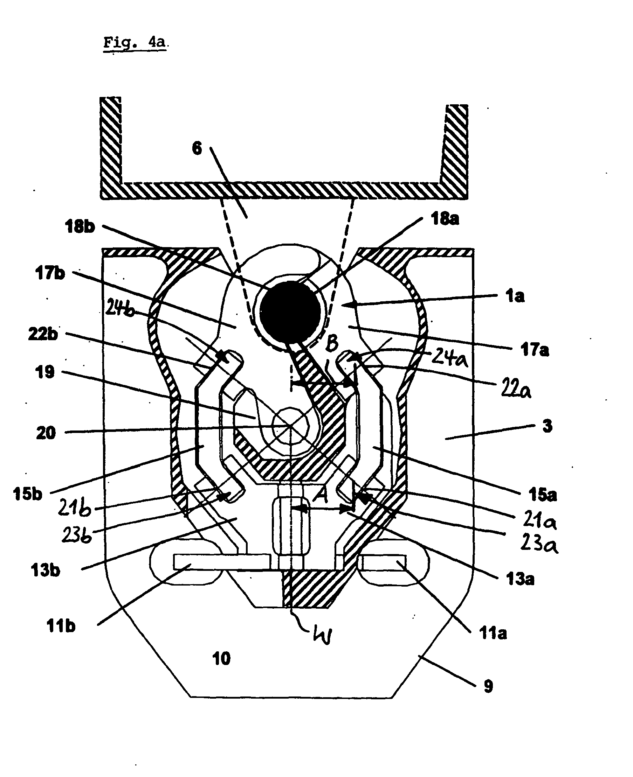

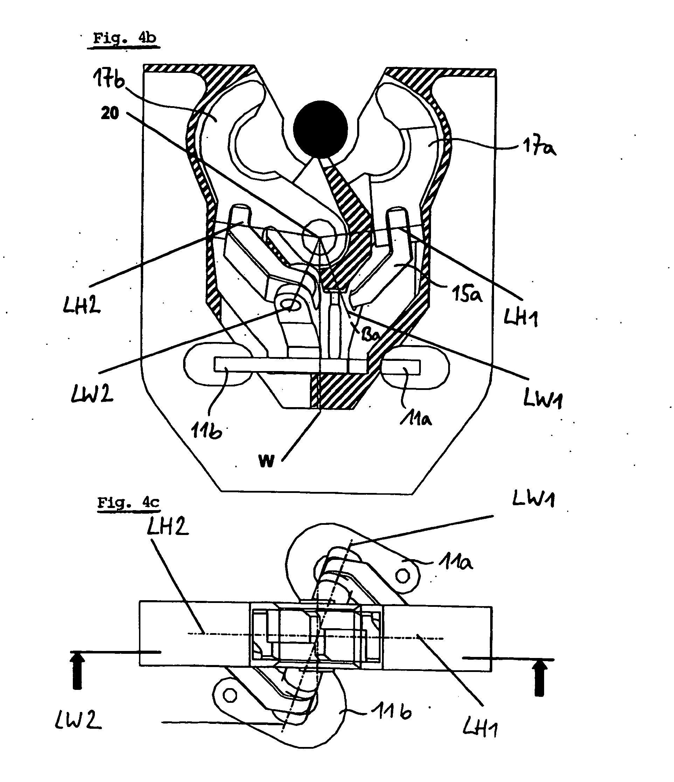

Der Verriegelungs-Bolzen 5 verläuft in einer Längsrichtung 7, die sich vorzugsweise senkrecht zu einer Bezugsebene 10 erstreckt. In der Darstellung der Fig. 1 bis 4 durch die Lage der Bezugsebene 10 durch die Lage der Rippe 9 als Teil des Strukturteils 3 wiedergegeben.

In den Figuren ist eine Ausführungsform der erfindungsgemäßen Verriegelungs-Vorrichtung 1 mit zwei Verriegelungs-Mechaniken 1a und 1b mit jeweils einem Antriebshebel 11a, 11b und mit jeweils einem mit diesem fest verbundenen Wipphebel 13a bzw. 13b. Jeder Wipphebel 13a, 13b wirkt über eine Drehbewegung um dieselben Achse W und mittels jeweils eines Lenkhebels 15a bzw. 15b auf jeweils einen Verriegelungshaken 17a bzw. 17b, die in einem gemeinsamen Drehgelenk 19 mit einem Achsenzentrum 20 und einer Achse oder Achsenrichtung H gelagert sind. Beide Verriegelungshaken werden zur Verriegelung des Verriegelungsbolzens 5 in einer Drehbewegung mit dem Achsenzentrum 20 als Drehpunkt aufeinander zu bewegt. Wenn die Bewegung der Verriegelungshaken 17a bzw. 17b durch eine senkrecht zur Bezugsebene 10 verlaufenden Achse H bestimmt wird, bewegen sich die Verriegelungshaken in einer Art Schwenkbewegung in der Bezugsebene 10.

Dabei ist jeder Lenkhebel mit einem ersten Ende 23a, 23b mit dem entsprechenden Wipphebel 13a bzw. 13b und mit einem zweiten Ende 24a, 24b mit dem entsprechenden Verriegelungshaken 17a bzw. 17b gelenkig verbunden. Das erste Ende 23a, 23b ist jeweils in einem Abstand A und das zweite Ende 24a, 24b in einem Abstand B von der Achse W angeordnet. Dadurch befindet sich der Lenkhebel 15a, 15b exzentrisch zur Achse W geführt. In einer speziellen Ausführungsform sind die Abstände A und B gleich groß.

Der Wipp-Hebel ist fest mit dem Antriebshebel verbunden oder im Gehäuse bzw. dem Strukturteil 3 gelagert.

Ein Antriebshebel 11a oder 11b, ein Lenkhebel 15a bzw. 15b sowie ein Verriegelungshaken 17a bzw. 17b bilden jeweils eine Verriegelungs-Mechanik 1a bzw. 1b.

Jeder Wipphebel 13a,13b ist über ein erstes Drehgelenk 21a bzw. 21b mit dem Lenkhebel 15a bzw. 15b gelenkig verbunden, wobei das erste Drehgelenk 21a bzw. 21b eine Drehachse LW1 bzw. LW2 bewirkt. Außerdem ist jeder Wipphebel 13a, 13b über ein zweites Drehgelenk 22a bzw. 22b gelenkig mit dem zugehörigen Verriegelungshaken 17a bzw. 17b verbunden, wobei das zweite Drehgelenk 22a bzw. 22b eine Drehachse LH1 bzw. LH2 bewirkt. Die Drehachsen LW1 und LH1 bzw. LW2 und LH2 sowie die Drehachse W der Wipphebel-Bewegung jeweils einer Verriegelungs-Mechanik 1a bzw. 1b liegen in einer Bezugsebene 10, kreuzen sich in dem Achsenzentrum 20 in einem Winkel 30a bzw. 30b. Dieser Winkel kann in einer Ausgangsstellung 90 Grad betragen.

Die Achsen W, LW1 und LH1 bzw. LW2 und LH2 der Verriegelungs-Mechaniken 1a und 1b müssen bei deren paarweisen Anordnung nicht zueinander symmetrisch verlaufen, wenn sie die voranstehend bezeichneten Verlauf haben.

Durch diese Anordnung erfolgt bei einer Drehung des Antriebshebels um die in der Bezugsebene 10 liegenden Achse W eine Verschwenkung des Lenkhebels in einer Weise, dass dessen mit dem entsprechenden Verriegelungs-Haken 17a bzw. 17b verbundenes Ende 24a bzw. 24b in der Bezugsebene 10 bewegt wird und auf diese Weise des Verriegelungs-Haken 17a bzw. 17b in der Bezugsebene 10 in die offene oder schließende Stellung bewegt.

Die Betätigung der erfindungsgemäßen Verriegelungs-Vorrichtung 1 erfolgt über zumindest einen Antriebshebel 11. In der Ausführungsform nach den Fig. 1 bis 4 ist eine Variante des erfindungsgemäßen Gegenstands mit zwei Verriegelungs-Mechaniken 1a und 1b bzw. zwei Antriebshebel 11a, 11b dargestellt.

Die zwei Verriegelungs-Mechaniken 1a und 1b, die bei der in den Fig. 1 bis 4 dargestellten Ausführungsform vorgesehen sind, wirken in Bezug auf die Achse W zusammen, wobei die Antriebshebel bei der Betätigung gegensinnig angetrieben werden, so dass sich die Lenkhebel 15a und 15b punktsymmetrisch zum Achsenzentrum 10 bewegen, um die Verriegelungshaken 17a und 17b aufeinander zu oder voneinander weg zu bewegen. Alternativ können die Betätigungsrichtungen auch gleichsinnig oder parallel zueinander sein, wenn bei einer Verriegelungs-Mechanik 1a oder 1b eine entsprechende Mechanik zur Änderung der Betätigungsrichtung vorgesehen ist.

Zu diesem Zweck ist je nach der räumlichen Anordnung der Elemente der Verriegelungsmechanik 1a bzw. 1b eine bestimmte Anordnung des Wipphebels auf dem Antriebshebel und gegebenenfalls eine entsprechend winklige Gestaltung des Lenkhebels vorzusehen.

Der Antriebshebel ist gelagert über die Drehgelenke und kann noch eine zusätzlich mittels einer Führung in seiner Zustellbewegung geführt werden. Hierfür kann eine zusätzliche Lagerung des Antriebshebels Drehlager im Strukturteil 3 vorgesehen sein (nicht dargestellt).

Zur Betätigung eines Antriebshebels 11a oder 11b und somit eines Wipphebels 13a bzw. 13b wirkt ein Betätigungselement 40 z.B. linear in einer BetätigungsRichtung 41 auf den jeweiligen Antriebshebel 11a bzw. 11b. Das Betätigungselement 40 kann eine Übertragungsstange oder auch ein Antriebselement wie z.B. ein hydraulischer, pneumatischer oder elektrischer Stellzylinder oder Stellantrieb sein. Auch kann die Betätigung über ein mechanisches Übertragungsglied wie z.B. einen Seilzug erfolgen. Vorteilhafterweise verläuft die lineare Betätigungsrichtung 41 in Richtung der Drehachse des Drehgelenks 19 und der Längsrichtung des Bolzens 5. In einer alternativen Ausführungsform kann der Antriebshebel 11a bzw. 11b auch mittels eines rotatorischen Antriebselements z.B. einen rotatorischen Stellantrieb angetrieben werden. Ein solcher kann direkt mit einem Wipphebel verbunden sein. Die Art und Gestaltung der Antriebselemente hängen vom jeweiligen Anwendungsfall und insbesondere von den Anforderungen bezüglich des verfügbaren Einbauraumes und der bereitzustellenden Antriebsleistung ab.

Die Lagerfläche 18a bzw. 18b des Verriegelungshakens 17a bzw. 17b, die in der Eingriffsstellung derselben zum Teil an der Oberfläche des Verriegelungsbolzens 5 anliegt, ist vorzugsweise sphärisch gebildet. Durch die sphärische Lagerung des Bolzens wird eine Verspannung desselben sowie der Verriegelungs-Vorrichtung 1 aufgrund dynamischer Bewegungen vermieden.

In einer alternativen Ausführungsform der Erfindung kann die erfindungsgemäße Verriegelungs-Vorrichtung 1 auch nur eine Verriegelungs-Mechanik 1a umfassen. In diesem Fall ist anstelle einer zweiten Verriegelungs-Mechanik 1b ein entsprechend gestaltetes unbewegliches Gegenstück, das Teil des Strukturteils 3 ist. Dieses kann insbesondere auch einen Verriegelungshaken aufweisen, der das Gegenstück zu dem beweglichen Verriegelungshaken 17a zur Aufnahme des Bolzens 5 bildet. Dabei kann auch eine Zentrierfeder F verwendet werden.

Im folgenden wird die Funktionsweise zur Öffnung der erfindungsgemäßen Verriegelungs-Vorrichtung 1 in der in den Figuren 1 bis 4 dargestellten Ausführungsform beschrieben:

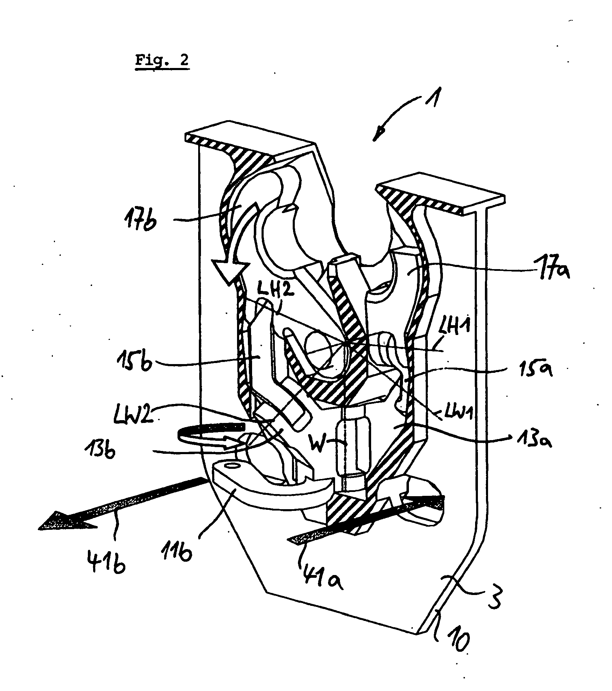

Ausgehend von der in der Figur 1 dargestellten schließenden Stellung der Verriegelungs-Vorrichtung 1 oder der Verriegelungs-Haken 17a, 17b wird diese durch entsprechende Drehung der Antriebshebel 11a, 11b um die in der Bezugsebene 10 liegenden Achse W in die in der Figur 2 dargestellten offenen Stellung gebracht. Dabei das Drehgelenk 21a bzw. 21b des Wipphebels rotatorisch in einem Abstand A um die Drehachse W geführt. Dadurch dass sich die Drehachsen LW1 und LH1 bzw. LW2 und LH2 sowie die Drehachse W der Wipphebel-Bewegung in einem Achsenzentrum 20 schneiden, werden die Lenkhebel 13a und 13b in einer Weise bewegt, dass die mit dem entsprechenden Verriegelungs-Haken 17a bzw. 17b verbundenen Enden 24a bzw. 24b in der Bezugsebene 10 bewegt werden und auf diese Weise die Verriegelungs-Haken 17a bzw. 17b in der Bezugsebene 10 in die offene Stellung bewegt.

## Patentansprüche

1. Verriegelungs-Vorrichtung (1) zur Verriegelung zweier relativ zueinander beweglicher Struktur-Teile mittels eines zur Verriegelungs-Vorrichtung gehörenden Verriegelungs-Hakens (17a, 17b), das in einem Gelenk (20) mit einer Achse (20) zur Verschwenkung des Verriegelungs-Hakens (17a, 17b) um eine Achse (H) mittels eines Betätigungselements (40a) in einer Bezugsebene (10) gelagert ist,
**dadurch gekennzeichnet, dass**
zumindest eine Verriegelungs-Mechanik (1a, 1b) mit jeweils einem mit dem Betätigungselement zur Drehung um eine Achse (W) zusammenwirkenden Wipphebel (13a bzw. 13b) vorgesehen ist, der über ein erstes Drehgelenk (23a, 23b; LW) mit dem ersten Ende eines Lenkhebels (15a; 15b) verbunden ist, dessen zweites Ende (24a; 24b) über ein zweites Drehgelenk (22a; 22b) mit dem Verriegelungs-Haken (17a, 17b) verbunden ist,
wobei die Drehachse (W) des Wipphebels sowie die Drehachsen (LW1, LW2; LH1, LH2) des ersten (21a, 21 b) und des zweiten (22a, 22b) Drehgelenks sich in der Achse (H) des Verriegelungs-Hakens (17a, 17b) kreuzen.

2. Veniegelungs-Vorrichtung nach dem Anspruch 1, **dadurch gekennzeichnet, dass** zwei Verriegelungs-Mechaniken (1a, 1b) in Bezug auf die Achse W zusammenwirken, wobei die Antriebshebel bei der Betätigung gegensinnig angetrieben werden, um die Lenkhebel (15a, 15b) zueinander punktsymmetrisch in Bezug auf die Achse (H) der Verriegelungs-Haken zu bewegen, um die Verriegelungshaken aufeinander zu oder voneinander weg zu bewegen.

3. Verriegelungs-Vorrichtung nach dem Anspruch 1, **dadurch gekennzeichnet, dass** die Lagerfläche (18a, 18b) des Verriegelungshakens (17a, 17b), die in der Eingriffsstellung desselben zum Teil an der Oberfläche des Verriegelungsbolzens 5 anliegt, sphärisch gebildet ist.

4. Verriegelungs-Vorrichtung nach einem der voranstehenden Ansprüche 1 bis 3, **dadurch gekennzeichnet, dass** zur Betätigung eines Antriebshebels (11 a, 11 b) ein Betätigungselement (40) linear auf den jeweiligen Antriebshebel (11a, 11b) wirkt.

5. Verriegelungs-Vorrichtung nach dem Anspruch 4, **dadurch gekennzeichnet, dass** das Betätigungselement (40) ein hydraulischer, pneumatischer oder elektrischer Stellantrieb ist.

6. Verriegelungs-Vorrichtung nach einem der voranstehenden Ansprüche 1 bis 3, **dadurch gekennzeichnet, dass** ein rotatorischer Stellantrieb auf den Wipphebel wirkt, um diesen zu betätigen.

## Claims

1. Locking device (1) for locking two structural elements which are movable relative to each other by means of a locking hook (17a, 17b) which belongs to the locking device and is mounted in a joint (20) by means of a spindle (20) for pivoting said locking hook (17a, 17b) about an axis (H) in a reference plane (10) by means of an actuating element (40a), **characterized in that** at least one locking mechanism (1a, 1b) is provided with in each case one rocker lever (13a or 13b) which interacts with the actuating element for rotation about an axis (W) and is connected via a first rotary joint (23a, 23b; LW) to the first end of a guiding lever (15a; 15b), the second end (24a; 24b) of which is connected via a second rotary joint (22a; 22b) to the locking hook (17a, 17b), the axis of rotation (W) of the rocker lever and the axis of rotation (LW1, LW2; LH1, LH2) of the first rotary joint (21a, 21b) and of the second rotary joint (22a, 22b) intersecting on the axis (H) of the locking hook (17a, 17b).

2. Locking device according to Claim 1, **characterized in that** two locking mechanisms (1, 1b) interact with respect to the axis (W), the driving levers being driven in opposite directions upon actuation in order to move the guiding levers (15a, 15b) towards each other point-symmetrically with respect to the axis (H) of the locking hooks in order to move the locking hooks towards each other or away from each other.

3. Locking device according to Claim 1, **characterized in that** the bearing surface (18a, 18b) of the locking hook (17a, 17b), which bearing surface, in the engagement position of said locking hook, bears partially against the surface of the locking bolt (5), is formed spherically.

4. Locking device according to one of the preceding Claims 1 to 3, **characterized in that**, in order to actuate a drive lever (11a, 11b), an actuating element (40) acts linearly on the particular drive lever (11a, 11b).

5. Locking device according to Claim 4, **characterized in that** the actuating element (40) is a hydraulic, pneumatic or electric actuator.

6. Locking device according to one of the preceding Claims 1 to 3, **characterized in that** a rotatory actuator acts on the rocker lever in order to actuate the latter.

## Revendications

1. Dispositif de verrouillage (1) pour verrouiller deux éléments de structure déplaçables l'un par rapport à l'autre, au moyen d'un crochet de verrouillage (17a, 17b) appartenant au dispositif de verrouillage, qui est monté dans une articulation (20) avec un axe (20) pour permettre le pivotement du crochet de verrouillage (17a, 17b) autour d'un axe (H) au moyen d'un élément d'actionnement (40a) dans un plan de référence (10),
**caractérisé en ce**
**qu'**au moins un mécanisme de verrouillage (1a, 1b) est prévu avec à chaque fois un levier à bascule (13a, respectivement 13b) coopérant avec l'élément d'actionnement en vue de la rotation autour d'un axe (W), lequel est connecté par le biais d'une première articulation pivotante (23a, 23b ; LW) à la première extrémité d'un levier de direction (15a ; 15b), dont la deuxième extrémité (24a ; 24b) est connectée au crochet de verrouillage (17a, 17b) par le biais d'une deuxième articulation pivotante (22a ; 22b),
l'axe de rotation (W) du levier à bascule ainsi que les axes de rotation (LW1, LW2 ; LH1, LH2) de la première (21a, 21b) et de la deuxième (22a, 22b) articulation pivotante se croisant dans l'axe (H) du crochet de verrouillage (17a, 17b).

2. Dispositif de verrouillage selon la revendication 1, **caractérisé en ce que** deux mécanismes de verrouillage (1a, 1b) coopèrent par rapport à l'axe W, les leviers d'entraînement étant entraînés en sens inverse lors de l'actionnement afin de déplacer les leviers de direction (15a, 15b) l'un par rapport à l'autre avec une symétrie ponctuelle par rapport à l'axe (H) des crochets de verrouillage, afin de déplacer les crochets de verrouillage l'un vers l'autre ou à l'écart l'un de l'autre.

3. Dispositif de verrouillage selon la revendication 1, **caractérisé en ce que** la surface d'appui (18a, 18b) du crochet de verrouillage (17a, 17b), qui s'applique dans sa position d'engagement en partie contre la surface du boulon de verrouillage 5, a une forme sphérique.

4. Dispositif de verrouillage selon l'une quelconque des revendications précédentes 1 à 3, **caractérisé en ce que** pour l'actionnement d'un levier d'entraînement (11a, 11b), un élément d'actionnement (40) agit linéairement sur le levier d'entraînement respectif (11a, 11b).

5. Dispositif de verrouillage selon la revendication 4, **caractérisé en ce que** l'élément d'actionnement (40) est un entraînement de commande hydraulique, pneumatique ou électrique.

6. Dispositif de verrouillage selon l'une quelconque des revendications précédentes 1 à 3, **caractérisé en ce qu'**un entraînement de commande rotatif agit sur le levier à bascule afin de l'actionner.
